# EUROPÄISCHE PATENTSCHRIFT

(11) **EP 3 176 032 B1**
(45) Veröffentlichungstag und Bekanntmachung des Hinweises auf die Patenterteilung: **09.10.2019**
(21) Anmeldenummer: 15197812.9
(22) Anmeldetag: 03.12.2015
(51) Int. Cl.: B60P 3/077, B60P 3/36

(54) **REISEFAHRZEUG, INSBESONDERE REISEMOBIL**
TRAVELING VEHICLE, IN PARTICULAR MOBILE HOME
VEHICULE DE TOURISME, EN PARTICULIER CAMPING-CAR

(43) Veröffentlichungstag der Anmeldung: 07.06.2017
(73) Patentinhaber: Scolotech GmbH, 88709 Meersburg (DE)
(72) Erfinder: SCHULER, Karl-Heinz, 88255 Köpfingen über Baienfurt (DE)
(74) Vertreter: Daub, Thomas

(56) Entgegenhaltungen:
- DE-A1- 4 330 045
- DE-U1-202006 005 639
- FR-A1- 2 888 558
- US-A- 4 465 196

## Beschreibung

### Stand der Technik

Die Erfindung betrifft ein Reisefahrzeug, insbesondere ein Reisemobil, nach dem Oberbegriff des Patentanspruchs 1, sowie ein Verfahren nach dem Oberbegriff des Patentanspruchs 7.

Es ist bereits ein Reisefahrzeug, insbesondere ein Reisemobil, mit zumindest einem Stauraum, der zu einer Aufnahme wenigstens eines Zweirads vorgesehen ist, und mit zumindest einer Bodenwandung, die einen Boden des zumindest einen Stauraums ausbildet, bekannt.

FR 2888558 A1 offenbart ein Fahrzeug zum Aufnahme von Zweirädern.

Die Aufgabe der Erfindung besteht insbesondere darin, ein gattungsgemäßes Reisefahrzeug bereitzustellen, mit dem wenigstens ein Zweirad besonders platzsparend in dem zumindest einen Stauraum transportiert werden kann.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Reisefahrzeug, insbesondere einem Reisemobil, mit zumindest einem Stauraum, der zu einer Aufnahme wenigstens eines Zweirads vorgesehen ist, und mit zumindest einer Bodenwandung, die einen Boden des zumindest einen Stauraums ausbildet.

Es wird vorgeschlagen, dass das Reisefahrzeug zumindest eine Reifenaufnahme umfasst, die zu einer Aufnahme zumindest eines Reifens des wenigstens einen Zweirads vorgesehen ist, wobei die zumindest eine Reifenaufnahme eine partielle Vertiefung in der zumindest einen Bodenwandung ausbildet. Dadurch kann der zumindest eine Stauraum besonders kompakt ausgebildet werden, ohne auf einen Transport des wenigstens einen Zweirads in einer aufrechten Position verzichten zu müssen. Eine Demontage eines oder beider Reifen des wenigstens einen Zweirads für einen Transport kann vorteilhaft vermieden werden. Ferner kann auf eine Demontage eines Lenkers des wenigstens einen Zweirads verzichtet werden. Der Stauraum kann vorteilhaft eine Stauraumhöhe aufweisen, die geringer ist als eine Gesamthöhe des wenigstens einen Zweirads. Dadurch kann beispielsweise besonders vorteilhaft ein Bett oberhalb des Stauraums untergebracht werden. Alternativ können oberhalb des wenigstens einen Zweirads vorteilhaft weitere Gegenstände verstaut werden.

Das Reisefahrzeug kann unter anderem von einem Wohnwagen, einem Alkovenmobil, einem Kastenwagen, einem Van, einem teilintegrierten Reisemobil und/oder besonders bevorzugt von einem vollintegrierten Reisemobil gebildet sein. Der zumindest eine Stauraum ist bevorzugt innerhalb einer Garage, besonders bevorzugt innerhalb einer Heckgarage, angeordnet. Unter einem "Zweirad" soll in diesem Zusammenhang insbesondere ein Fahrrad, ein Elektrofahrrad und/oder ein Kraftrad, wie insbesondere ein Motorrad und/oder ein Motorroller, verstanden werden.

Die zumindest eine Reifenaufnahme ist vorzugsweise wannenförmig ausgebildet. Eine Oberkante der zumindest einen Reifenaufnahme schließt vorzugsweise bündig mit der zumindest einen Bodenwandung ab. Insbesondere weist die zumindest eine Reifenaufnahme eine Reifenauflagefläche auf, die unterhalb einer Haupterstreckungsebene der Bodenwandung angeordnet ist. Bevorzugt verläuft die Reifenauflagefläche zumindest bereichsweise, bevorzugt zu einem Großteil, parallel zur Haupterstreckungsebene. Weiterhin vorteilhaft verläuft ein Teil der Reifenauflagefläche schräg zur Haupterstreckungsebene. Alternativ ist es denkbar, dass die gesamte Reifenauflage zumindest im Wesentlichen parallel zur Haupterstreckungsebene verläuft. Unter "zumindest im Wesentlichen" soll in diesem Zusammenhang insbesondere eine Abweichung von weniger als 10°, bevorzugt von weniger als 5°, besonders bevorzugt von weniger als 1° verstanden werden.

Unter "unterhalb" soll in diesem Zusammenhang insbesondere in eine Vertikalrichtung versetzt verstanden werden, die senkrecht zur Bodenwandung verläuft und die zur Bodenwandung weist. Insbesondere entspricht die Vertikalrichtung in einem Fahrbetrieb in der Ebene zumindest im Wesentlichen einer Richtung der Schwerkraft. Die Reifenaufnahme ist vorteilhaft schlitzförmig ausgebildet. Eine Länge der zumindest einen Reifenaufnahme ist dabei bevorzugt wesentlich größer als eine Breite der zumindest einen Reifenaufnahme. Bevorzugt ist die Länge der zumindest einen Reifenaufnahme zumindest doppelt, bevorzugt zumindest dreimal, besonders bevorzugt zumindest fünfmal so groß wie eine Breite der zumindest einen Reifenaufnahme. Die partielle Vertiefung ist zu einer Aufnahme des zumindest einen Reifens des wenigstens einen Zweirads vorgesehen. Bevorzugt reicht die partielle Vertiefung in Vertikalrichtung betrachtet bis in einen Längsträgerbereich des Reisefahrzeugs. Unter "partiell" soll in diesem Zusammenhang insbesondere mit einem Anteil einer Gesamtfläche verstanden werden. Bevorzugt beträgt der Anteil weniger als 10 %. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In der Erfindung wird vorgeschlagen, dass die zumindest eine Reifenaufnahme eine Hauptlängserstreckung aufweist, die quer zu einer Fahrzeuglängsrichtung ausgerichtet ist. Dadurch kann ein Reifen auf besonders komfortable Weise in die zumindest eine Reifenaufnahme eingeschoben und/oder aus der Reifenaufnahme entnommen werden. Eine Demontage des Reifens vom zumindest einen Zweirad ist dabei vorteilhaft nicht erforderlich. Eine Längserstreckung des zumindest einen Stauraums kann vorteilhaft gering gehalten werden. Unter einer "Fahrzeuglängsrichtung" soll dabei insbesondere eine Richtung verstanden werden, welche parallel zu einer längsten Kante eines kleinsten geometrischen Quaders verläuft, welcher das Reisefahrzeug gerade noch vollständig umschließt. Unter "quer" soll in diesem Zusammenhang insbesondere in einem Winkel von zumindest im Wesentlichen 90° verstanden werden. Alternativ wird vorgeschlagen, dass die Reifenaufnahme eine Hauptlängsrichtung aufweist, die zumindest im Wesentlichen parallel zur Fahrzeuglängsrichtung ausgerichtet ist. Dadurch kann insbesondere bei einem Kastenwagen und/oder bei einem Van eine besonders platzsparende Anordnung des zumindest einen Zweirads erfolgen.

Des Weiteren wird vorgeschlagen, dass die zumindest eine Reifenaufnahme zumindest teilweise in einem Bereich einer Fahrzeugseitenwand angeordnet ist. Dadurch kann eine Breite des zumindest einen Stauraums besonders gut ausgenutzt werden. Es können vorteilhaft besonders große Zweiräder im Stauraum verstaut werden. Es ist in diesem Zusammenhang auch denkbar, dass sich die zumindest eine Reifenaufnahme von einem Bereich der Fahrzeugseitenwand bis zu einem Bereich einer gegenüberliegenden Seitenwand, insbesondere durchgängig, erstreckt.

Ferner wird vorgeschlagen, dass die partielle Vertiefung wenigstens 5 cm unter eine Hauptbodenfläche der zumindest einen Bodenwandung reicht. Dadurch kann eine Standsicherheit eines verstauten Zweirads vorteilhaft erhöht werden. Weiterhin kann eine Verstauhöhe geringer ausfallen als eine Gesamthöhe des Zweirads. Bevorzugt reicht die partielle Vertiefung wenigstens 10 cm, besonders bevorzugt wenigstens 15 cm, unter die Bodenfläche der zumindest einen Bodenwandung. Unter einer "Hauptbodenfläche" soll in diesem Zusammenhang insbesondere eine größtmögliche ebene Fläche der Bodenwandung verstanden werden.

Zudem wird vorgeschlagen, dass eine Oberkante der zumindest einen Reifenaufnahme zumindest im Wesentlichen bündig mit der zumindest einen Bodenwandung abschließt. Dadurch kann ein Reifen des Zweirads besonders einfach und kraftsparend in die Reifenaufnahme bewegt werden. Unter "zumindest im Wesentlichen bündig" soll in diesem Zusammenhang insbesondere mit einer maximalen Abweichung von 1 cm, bevorzugt mit einer maximalen Abweichung von 0,5 cm und besonders bevorzugt ohne eine Abweichung verstanden werden.

Weiterhin wird vorgeschlagen, dass eine Breite der zumindest einen Reifenaufnahme im Wesentlichen einer Breite des aufzunehmenden Reifens entspricht. Dadurch kann ein besonders sicherer Seitenhalt eines in der Reifenaufnahme eingebrachten Reifens erzielt werden. Unter "im Wesentlichen" soll hier insbesondere mit einer maximalen Abweichung von 5 %, bevorzugt von 2 % und ganz besonders bevorzugt von 0,5 % verstanden werden.

Des Weiteren wird vorgeschlagen, dass das Reisefahrzeug zumindest eine Deckenwandung aufweist, die eine Decke des zumindest einen Stauraums ausbildet und die dazu vorgesehen ist, aus einer Ausgangslage zumindest bereichsweise relativ zur zumindest einen Bodenwandung bewegt zu werden. Dadurch können auf einfache Weise Zweiräder in die Reifenaufnahme eingebracht werden, die eine größere Gesamthöhe aufweisen als eine Stauraumhöhe. Vorzugsweise verläuft die zumindest eine Deckenwandung in der Ausgangslage zumindest im Wesentlichen parallel zur zumindest einen Bodenwandung.

Ferner umfasst die Erfindung eine Scharniereinheit, die dazu vorgesehen ist, die zumindest eine Deckenwandung relativ zur zumindest einen Bodenwandung schwenkbar zu lagern. Dadurch kann ein besonders einfaches und kraftsparendes Anheben der zumindest einen Deckenwandung erreicht werden. Vorteilhaft umfasst die Scharniereinheit zumindest zwei Scharnierelemente. Die zumindest zwei Scharnierelemente sind insbesondere entlang einer Schwenkachse der Scharniereinheit versetzt zueinander angeordnet. Zusätzlich wird vorgeschlagen, dass das Reisefahrzeug eine Schienenführung und/oder eine Kulissenführung umfasst, die dazu vorgesehen ist, die zumindest eine Deckenwandung relativ zur zumindest einen Bodenwandung linear und/oder schwenkbar zu lagern. Besonders vorteilhaft kann das Reisefahrzeug eine Schienenführung umfassen, in welcher die zumindest eine Deckenwandung senkrecht zur zumindest einen Bodenwandung verschiebbar gelagert ist. Zusätzlich wird vorgeschlagen, dass die zumindest eine Deckenwandung motorisch relativ zur zumindest einen Bodenwandung bewegbar ist.

Weiterhin wird ein Verfahren zur Verstauung wenigstens eines Zweirads in einem Stauraum eines Reisefahrzeugs vorgeschlagen, wobei zumindest ein Reifen des wenigstens einen Zweirads in zumindest eine Reifenaufnahme bewegt wird, die eine partielle Vertiefung zumindest einer Bodenwandung ausbildet. Dadurch kann der zumindest eine Stauraum besonders kompakt ausgebildet werden, ohne auf einen Transport des wenigstens einen Zweirads in einer aufrechten Position verzichten zu müssen. Eine Demontage eines oder beider Reifen des wenigstens einen Zweirads für einen Transport kann vorteilhaft vermieden werden. Ferner kann auf eine Demontage eines Lenkers des wenigstens einen Zweirads verzichtet werden.

Zudem wird vorgeschlagen, dass zu einer Verstauung des wenigstens einen Zweirads zumindest eine Deckenwandung relativ zur zumindest einen Bodenwandung zumindest bereichsweise wegbewegt, insbesondere weggeschwenkt wird. Dadurch kann ein besonders einfaches Verstauen des wenigstens einen Zweirads erzielt werden. Es wird vorgeschlagen, dass zu einer Entnahme des wenigstens einen Zweirads die zumindest eine Deckenwandung relativ zur zumindest einen Bodenwandung zumindest bereichsweise weggeschwenkt wird.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen schematischen Grundriss eines Reisefahrzeugs mit einem Stauraum,
- Fig. 2: einen schematischen Schnitt durch den Stauraum des Reisefahrzeugs während einer Verstauung und/oder einer Entnahme eines Zweirads und
- Fig. 3: einen schematischen Schnitt durch den Stauraum des Reisefahrzeugs in einem verstauten Zustand des Zweirads.

### Beschreibung des Ausführungsbeispiels

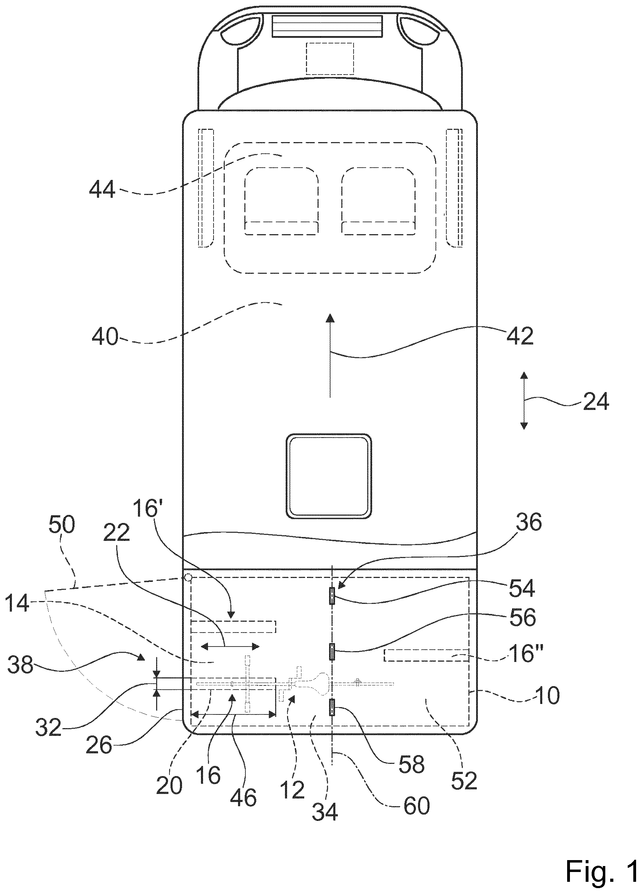

In der Figur 1 ist schematisch ein Grundriss eines Reisefahrzeugs dargestellt. Das Reisefahrzeug ist von einem Reisemobil gebildet. Das Reisemobil ist vollintegriert ausgebildet. Das Reisefahrzeug weist einen Stauraum 10 auf. Es ist in diesem Zusammenhang auch denkbar, dass das Reisefahrzeug mehrere Stauräume aufweist. Der Stauraum 10 ist innerhalb einer Garage 38 angeordnet. Genauer gesagt, ist der Stauraum 10 innerhalb einer Heckgarage angeordnet. Anders ausgedrückt, schließt die Garage 38 eine Heckpartie des Reisefahrzeugs ab. An die Garage 38 grenzt ein Wohnbereich 40 des Reisefahrzeugs an. Der Wohnbereich 40 ist in eine Vorwärtsfahrrichtung 42 betrachtet hinter der Garage 38 angeordnet. An den Wohnbereich 40 schließt sich in Vorwärtsfahrrichtung 42 betrachtet eine Fahrerkabine 44 an.

Der Stauraum 10 ist zu einer Aufnahme eines Zweirads 12 vorgesehen. Das Zweirad 12 ist von einem Fahrrad gebildet. Es ist in diesem Zusammenhang jedoch auch denkbar, dass das Zweirad 12 von einem Elektrofahrrad, einem Motorrad oder einem Motorroller gebildet ist. Der Stauraum 10 weist einen rechteckigen Grundriss auf.

Das Reisefahrzeug umfasst eine Reifenaufnahme 16. Ferner umfasst das Reisefahrzeug zwei weitere Reifenaufnahmen 16', 16". Die Reifenaufnahmen 16, 16', 16" sind in eine Fahrzeuglängsrichtung 24 betrachtet versetzt zueinander angeordnet. Die Reifenaufnahmen 16, 16" sind quer zur Fahrzeuglängsrichtung 24 betrachtet versetzt zueinander angeordnet. Ansonsten entsprechen sich die Reifenaufnahmen 16, 16', 16" in Form und Funktion. Daher wird im Folgenden auf eine Beschreibung der zwei weiteren Reifenaufnahmen 16', 16" verzichtet.

Das Reisefahrzeug weist eine Bodenwandung 14 auf. Die Bodenwandung 14 bildet einen Boden des Stauraums 10 aus. Hierbei ist es insbesondere denkbar, dass das Reisefahrzeug mehrere Bodenwandungen 14 aufweist, die zusammen den Boden des Stauraums 10 ausbilden. Die Reifenaufnahme 16 ist zu einer Aufnahme eines Reifens 18 des Zweirads 12 vorgesehen. Die Reifenaufnahme 16 bildet eine partielle Vertiefung 20 in der Bodenwandung 14 aus. Die Reifenaufnahme 16 ist schlitzförmig ausgebildet. Eine Länge 46 der Reifenaufnahme 16 ist wesentlich größer als eine Breite 32 der Reifenaufnahme 16. Die Länge 46 der Reifenaufnahme 16 ist mehr als achtmal so groß wie die Breite 32 der Reifenaufnahme 16.

Die Breite 32 der Reifenaufnahme 16 entspricht im Wesentlichen einer Breite des aufzunehmenden Reifens 18. Die Reifenaufnahme 16 weist eine Hauptlängserstreckung 22 auf. Die Hauptlängserstreckung 22 ist quer zur Fahrzeuglängsrichtung 24 ausgerichtet. Die Reifenaufnahme 16 ist in einem Bereich einer Fahrzeugseitenwand 26 angeordnet. Die Fahrzeugseitenwand 26 bildet im Bereich der Garage 38 eine Seitentür 50 aus. Eine Höhe der Seitentür 50 entspricht im Wesentlichen einer Höhe des Stauraums 10.

Das Reisefahrzeug weist eine Deckenwandung 34 auf. Die Deckenwandung 34 bildet einen Teil einer Decke des Stauraums 10 aus. Die Deckenwandung 34 ist relativ zur Bodenwandung 14 beweglich ausgebildet. Das Reisefahrzeug weist eine weitere Deckenwandung 52 auf. Die Deckenwandung 34 und die weitere Deckenwandung 52 sind, quer zur Fahrzeuglängsrichtung 24 betrachtet, hintereinander angeordnet. Die weitere Deckenwandung 52 ist relativ zur Bodenwandung 14 fest angeordnet. Das Reisefahrzeug umfasst eine Scharniereinheit 36. Die Scharniereinheit 36 ist dazu vorgesehen, die Deckenwandung 34 relativ zur Bodenwandung 14 schwenkbar zu lagern. Die Scharniereinheit 36 umfasst mehrere Scharnierelemente 54, 56, 58. Die Scharnierelemente 54, 56, 58 sind entlang einer Schwenkachse 60 der Scharniereinheit 36 versetzt zueinander angeordnet. Die Schwenkachse 60 verläuft parallel zur Fahrzeuglängsrichtung 24.

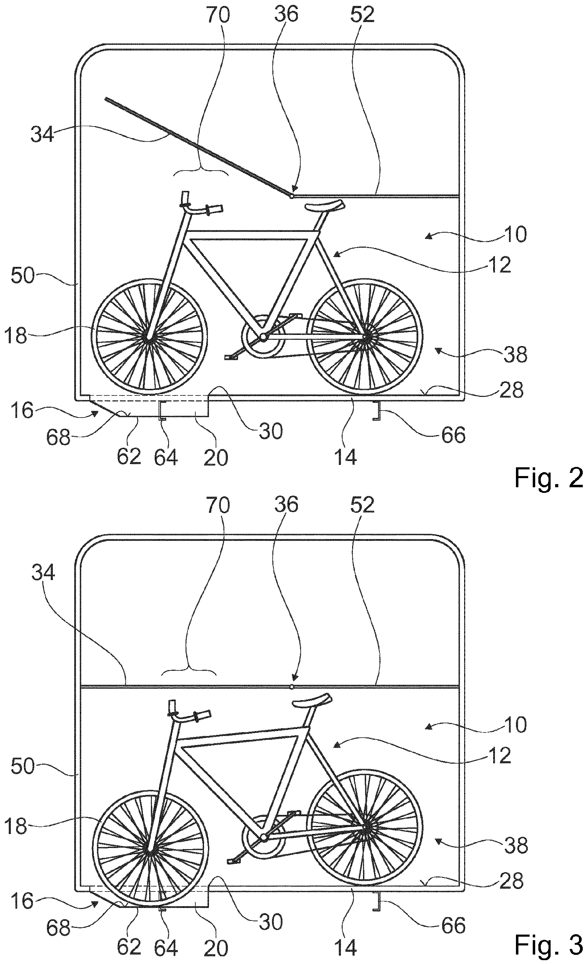

Wie in der Figur 2 gezeigt, reicht die partielle Vertiefung 20 etwa 10 cm unter eine Hauptbodenfläche 28 der Bodenwandung 14. Eine Oberkante 30 der Reifenaufnahme 16 schließt bündig mit der Bodenwandung 14 ab. Die Reifenaufnahme 16 ist wannenförmig ausgebildet. Die Bodenwandung 14 weist eine geringere Dicke auf als eine Tiefe der partiellen Vertiefung 20. Die partielle Vertiefung 20 durchdringt die Bodenwandung 14 vollständig. Die Reifenaufnahme 16 weist eine Wanne 62 auf. Die Wanne 62 ist unterhalb der Bodenwandung 14 angeordnet. Die Wanne 62 ist mit der Bodenwandung 14 verschraubt. Es ist hierbei insbesondere auch denkbar, dass die Wanne 62 mit der Bodenwandung 14 verklebt, vernietet und/oder verrastet ist. Die Wanne 62 ist aus einem Blech hergestellt. Es ist in diesem Zusammenhang insbesondere auch denkbar, dass die Wanne 62 aus einem Kunststoff hergestellt ist.

Unterhalb der Bodenwandung 14 sind zwei Fahrzeuglängsträger 64, 66 angeordnet. Die Bodenwandung 14 liegt auf den Fahrzeuglängsträgern 64, 66 auf. Die Fahrzeuglängsträger 64, 66 ragen, in Fahrzeuglängsrichtung 24 betrachtet, bis vor die Reifenaufnahme 16. Die Wanne 62 erstreckt sich in Richtung eines Untergrunds weniger weit als die Fahrzeuglängsträger 64, 66. Eine Bodenfreiheit des Reisefahrzeugs wird durch die Wanne 62 nicht verringert. Die Reifenaufnahme 16 weist eine Reifenauflagefläche 68 auf. Die Reifenauflagefläche 68 ist unterhalb der Hauptbodenfläche 28 der Bodenwandung 14 angeordnet. Die Reifenauflagefläche 68 verläuft bereichsweise parallel zur Hauptbodenfläche 28. Ein Teil der Reifenauflagefläche 68 ist schräg zur Hauptbodenfläche 28 verlaufend angeordnet. Der Teil der Reifenauflagefläche 68 ist um etwa 25° zur Hauptbodenfläche 28 angewinkelt.

Das Zweirad 12 weist in einem Lenkerbereich 70 eine größere Höhe auf als eine Höhe des Stauraums 10, die sich von der Hauptbodenfläche 28 bis zur Deckenwandung 52 erstreckt. Ein Heckteil des Zweirads 12 weist eine geringere Höhe auf und lässt sich durch die Seitentür 50 in den Stauraum 10 einbringen. Die Deckenwandung 34 ist aus einer Ausgangslage hochgeschwenkt. Die Deckenwandung 34 ist somit dazu vorgesehen, aus der Ausgangslage heraus relativ zur Bodenwandung 14 bewegt zu werden. Die Deckenwandung 34 erstreckt sich in der Ausgangslage parallel zur Bodenwandung 14.

Eine Höhe zwischen der Deckenwandung 34 und der Bodenwandung 14 ist dadurch bereichsweise vergrößert. Das Zweirad 12 ist nun vollständig in den Stauraum 10 bewegbar. Der Lenkerbereich 70 passt aufgrund der vergrößerten Höhe in den Stauraum 10. Um die Deckenwandung 34 wieder in die Ausgangslage bewegen zu können, wird der Reifen 18 in die Reifenaufnahme 16 eingebracht (Figur 3). Der Lenkerbereich 70 senkt sich dabei ab. Die Deckenwandung 34 befindet sich wieder in der Ausgangslage. Die Deckenwandungen 34, 52 bilden einen Boden für ein nicht näher gezeigtes Bett aus. Das Bett kann dabei quer oder längs zur Fahrzeuglängsrichtung 24 verlaufen.

Somit wird bei einer Verstauung des Zweirads 12 in den Stauraum 10 der Reifen 18 in die Reifenaufnahme 16 bewegt, welche die partielle Vertiefung 20 ausbildet. Die Deckenwandung 34 wird zur Verstauung des Zweirads 12 relativ zur Bodenwandung 14 wegbewegt. Genauer gesagt, wird die Deckenwandung 34 zur Verstauung relativ zur Bodenwandung 14 weggeschwenkt. Zu einer Entnahme des Zweirads 12 wird die Deckenwandung 34 relativ zur Bodenwandung 14 weggeschwenkt.

## Patentansprüche

1. Reisemobil, mit zumindest einem Stauraum (10), der zu einer Aufnahme wenigstens eines Zweirads (12) vorgesehen ist, und mit zumindest einer Bodenwandung (14), die einen Boden des zumindest einen Stauraums (10) ausbildet,
und mit zumindest einer Reifenaufnahme (16), die zu einer Aufnahme zumindest eines Reifens (18) des wenigstens einen Zweirads (12) vorgesehen ist, wobei die zumindest eine Reifenaufnahme (16) eine partielle Vertiefung (20) in der zumindest einen Bodenwandung (14) ausbildet, wobei die zumindest eine Reifenaufnahme (16) eine Hauptlängserstreckung (22) aufweist, die quer zu einer Fahrzeuglängsrichtung (24) ausgerichtet ist, **gekennzeichnet durch** eine Scharniereinheit (36), die dazu vorgesehen ist, zumindest eine Deckenwandung (34) relativ zur zumindest einen Bodenwandung (14) schwenkbar zu lagern, wobei eine Schwenkachse (60) parallel zur Fahrzeuglängsrichtung (24) verläuft.

2. Reisemobil nach Anspruch 1,
**dadurch gekennzeichnet, dass**
die zumindest eine Reifenaufnahme (16) zumindest teilweise in einem Bereich einer Fahrzeugseitenwand (26) angeordnet ist.

3. Reisemobil nach Anspruch 1 oder 2,
**dadurch gekennzeichnet, dass**
die partielle Vertiefung (20) wenigstens 5 cm unter eine Hauptbodenfläche (28) der zumindest einen Bodenwandung (14) reicht.

4. Reisemobil nach einem der vorhergehenden Ansprüche,
**dadurch gekennzeichnet, dass**
eine Oberkante (30) der zumindest einen Reifenaufnahme (16) zumindest im Wesentlichen bündig mit der zumindest einen Bodenwandung (14) abschließt.

5. Reisemobil nach einem der vorhergehenden Ansprüche,
**dadurch gekennzeichnet, dass**
eine Breite (32) der zumindest einen Reifenaufnahme (16) im Wesentlichen einer Breite des aufzunehmenden Reifens (18) entspricht.

6. Reisemobil nach einem der vorhergehenden Ansprüche,
**gekennzeichnet durch**
zumindest eine Deckenwandung (34), die eine Decke des zumindest einen Stauraums (10) ausbildet und die dazu vorgesehen ist, aus einer Ausgangslage zumindest bereichsweise relativ zur zumindest einen Bodenwandung (14) bewegt zu werden.

7. Verfahren zur Verstauung wenigstens eines Zweirads (12) in einem Stauraum (10) eines Reisemobils, insbesondere eines Reisemobils nach einem der vorhergehenden Ansprüche,
wobei zumindest ein Reifen (18) des wenigstens einen Zweirads (12) in zumindest eine Reifenaufnahme (16), welche eine Hauptlängserstreckung (22) aufweist, die quer zu einer Fahrzeuglängsrichtung (24) ausgerichtet ist, bewegt wird, die eine partielle Vertiefung (20) zumindest einer Bodenwandung (14) ausbildet, **dadurch gekennzeichnet, dass**
zu einer Verstauung des wenigstens einen Zweirads (12) zumindest eine Deckenwandung (34) relativ zur zumindest einen Bodenwandung (14) zumindest bereichsweise weggeschwenkt wird, wobei eine Schwenkachse (60) parallel zur Fahrzeuglängsrichtung (24) verläuft.

## Claims

1. Mobile home, with at least one stowage space (10), which is configured for an accommodation of at least one two-wheeled vehicle (12), and with at least one bottom wall (14) implementing a bottom of the at least one stowage space (10),
and with at least one tire accommodation (16), which is configured for an accommodation of at least one tire (18) of the at least one two-wheeled vehicle (12), wherein the at least one tire accommodation (16) forms a partial deepening (20) in the at least one bottom wall (14), wherein the at least one tire accommodation (16) has a main longitudinal extension (22) that is aligned transversely to a longitudinal vehicle direction (24),
**characterised by** a hinge unit (36), which is configured to support at least one ceiling wall (34) in such a way that it is pivotable relative to the at least one bottom wall (14), a pivot axis (60) extending in parallel to the longitudinal vehicle direction (24).

2. Mobile home according to claim 1,
**characterised in that** the at least one tire accommodation (16) is arranged at least partially in a region of a vehicle side wall (26).

3. Mobile home according to claim 1 or 2,
**characterised in that** the partial deepening (20) extends under a main bottom surface (28) of the at least one bottom wall (14) by at least 5 cm.

4. Mobile home according to one of the preceding claims,
**characterised in that** an upper edge (30) of the at least one tire accommodation (16) ends at least substantially flush with the at least one bottom wall (14).

5. Mobile home according to one of the preceding claims,
**characterised in that** a width (32) of the at least one tire accommodation (16) is substantially equivalent to a width of the tire (18) that is to be accommodated.

6. Mobile home according to one of the preceding claims,
**characterised by** at least one ceiling wall (34), which forms a ceiling of the at least one stowage space (10) and is configured to be moved relative to the at least one bottom wall (14), at least section-wise, out of an initial position.

7. Method for the stowage of at least one two-wheeled vehicle (12) in a stowage space (10) of a mobile home, in particular a mobile home according to one of the preceding claims,
wherein at least one tire (18) of the at least one two-wheeled vehicle (12) is moved into at least one tire accommodation (16), which has a main longitudinal extension (22) aligned transversely to a longitudinal vehicle direction (24) and which forms a partial deepening (20) of at least one bottom wall (14),
**characterised in that,** for a stowage of the at least one two-wheeled vehicle (12), at least one ceiling wall (34) is pivoted away relative to the at least one bottom wall (14) at least section-wise, wherein a pivot axis (60) extends in parallel to the longitudinal vehicle direction (24).

## Revendications

1. Camping-car, avec au moins un espace de rangement (10) prévu pour recevoir au moins un cycle à deux-roues (12) et avec au moins une paroi de fond (14) implémentant un fond de l'au moins un espace de rangement (10),
et avec au moins un logement de pneu (16) prévu pour recevoir au moins un pneu (18) de l'au moins un cycle à deux-roues (12),
l'au moins un logement de pneu (16) formant un renfoncement partiel (20) dans l'au moins une paroi de fond (14),
l'au moins un logement de pneu (16) ayant une extension longitudinale principale (22) orientée transversalement à une direction longitudinale du véhicule (24),
**caractérisé par** une unité charnière (36) prévue pour supporter au moins une paroi de plafond (34) à être pivotable par rapport à l'au moins une paroi de fond (14), un axe de pivotement (60) s'étendant en parallèle à la direction longitudinale du véhicule (24).

2. Camping-car selon la revendication 1,
**caractérisé en ce que** l'au moins un logement de pneu (16) est disposé au moins partiellement dans une région d'une paroi latérale du véhicule (26).

3. Camping-car selon l'une quelconque des revendications 1 ou 2,
**caractérisé en ce que** le renfoncement partiel (20) s'étend par au moins 5 cm sous une surface de fond principale (28) de l'au moins une paroi de fond (14).

4. Camping-car selon l'une quelconque des revendications précédentes,
**caractérisé en ce qu'un** bord supérieur (30) de l'au moins un logement de pneu (16) termine au moins sensiblement affleurant avec l'au moins une paroi de fond (14).

5. Camping-car selon l'une quelconque des revendications précédentes,
**caractérisé en ce qu'une** largeur (32) de l'au moins un logement de pneu (16) est sensiblement équivalent à une largeur du pneu (18) à accueillir.

6. Camping-car selon l'une quelconque des revendications précédentes,
**caractérisé par** au moins une paroi de plafond (34), qui forme un plafond de l'au moins un espace de rangement (10) et qui est configurée à être mouvée, au moins en partie, d'une position initiale par rapport à l'au moins une paroi de fond (14).

7. Procédé pour le rangement d'au moins un cycle à deux-roues (12) dans un espace de rangement (10) d'une camping-car, notamment d'un camping-car selon l'une quelconque des revendications précédentes,
où au moins un pneu (18) de l'au moins un cycle à deux-roues (12) est mouvé dans au moins un logement de pneu (16), qui comporte une extension longitudinale principale (22) orientée transversalement à une direction longitudinale du véhicule (24) et qui forme un renfoncement partiel (20) d'au moins une paroi de fond (14),
**caractérisé en ce que,** pour un rangement de l'au moins un cycle à deux-roues (12), au moins une paroi de plafond (34) est éloignée par pivotement au moins en partie par rapport à l'au moins une paroi de fond (14),
un axe de pivotement (60) s'étendant en parallèle à la direction longitudinale du véhicule (24).
